(19) Europäisches Patentamt
European Patent Office
Office européen des brevets

(11) **EP 2 039 590 B1**

(12) **EUROPEAN PATENT SPECIFICATION**

(45) Date of publication and mention
of the grant of the patent:
**23.06.2010 Bulletin 2010/25**

(51) Int Cl.:
***B62D 15/02*** *(2006.01)*

(21) Application number: **07116790.2**

(22) Date of filing: **19.09.2007**

(54) **Estimation of steering wheel angle**

Schätzen eines Lenkradwinkels

Estimation de l'angle de braquage d'un volant

(84) Designated Contracting States:
**DE GB SE**

(43) Date of publication of application:
**25.03.2009 Bulletin 2009/13**

(73) Proprietor: **Ford Global Technologies, LLC**
**Dearborn, MI 48126 (US)**

(72) Inventors:
• **Solyom, Stefan**
**SE-424 70 Olofstorp (SE)**

• **Hultén, Johan**
**SE-413 16, Göteborg (SE)**

(74) Representative: **Ekwall, Peter**
**Albihns.Zacco**
**Torggatan 8**
**Box 142**
**401 22 Göteborg (SE)**

(56) References cited:
**WO-A-02/18894    DE-A1- 10 226 988**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The invention relates to a control system and method for estimating an absolute steering wheel angle $\delta$ in a steering wheel system for a vehicle. The steering wheel system comprises a steering wheel and a steering shaft coupled to the steering wheel and a steering rack coupled to the steering shaft for changing direction of two road wheels upon motion of the steering wheel. The control system also comprises a first angle sensor that outputs a first measurement signal $\Phi_1$ comprising information about a first angular rotation and a second angle sensor that outputs a second measurement signal $\Phi_2$ comprising information about a second angular rotation.

BACKGROUND ART

In prior art it is known systems and methods for determining an absolute steering wheel angle (SWA) in a vehicle. This signal may be given by a costly absolute angle sensor or may be measured by single turn angle sensors which reset after a complete revolution by use of a counter. Both alternatives are expensive and give uncertain measurements.

US 6466889 teaches another alternative, namely the use of two mechanically coupled sensors that give two signals and the difference in signals are used for determining the absolute signal. One problem with using two mechanically coupled sensors according to US 6466889 is that the equipment becomes expensive and that high demands are set for the sensors and their relative positions.

EP 1 783 036 A2 is representing the closest prior art; the preambles of claims 1 and 10 are based on this document.

Hence, there exists a need for a cheaper, more robust and more sensitive method and device for determining an absolute steering wheel angle in a vehicle

DISCLOSURE OF INVENTION

The invention relates to a system and a method for detecting an absolute steering wheel angle in a vehicle given only relative signals from a first and a second single turn sensor. Here, "a single turn angle sensor" is a sensor that reports the measurement of a rotational motion as a modulo 360 value. By determining the ratio between the relative measurements according to the invention, the absolute signal can be uniquely determined.

Here, ratio refers to the gear ratio between two gear wheels or the like. The sensors are advantageously identical or at least so similar that any differences in measurements can be tolerated. The sensors then measure on two differently sized objects, for example on the above mentioned gear wheels. The output from each sensor is in the form of a signal that comprises information on the rotation of the rotating object and the difference of the size of the objects give different signals, so the difference in gear ratio will hereafter be referred to as the difference in gain because the signals are different for the above reasons.

However, two different types of single turn angle sensors may be used if the difference is taken into account so that the difference in gain represents the difference that would have been presented if the sensors were to be identical.

The sensor may comprise a rotating unit coupled to a shaft onto which the pinion/gear wheel is mounted or to the pinion itself, such that the rotating unit rotates upon rotation of the shaft. The rotating unit may be directly coupled or indirectly coupled. The latter means that at least a second rotating object or a band or the like, or a combination, may be used as a link between the shaft or pinion and the rotating unit for transformation of the rotational movement. The sensor may alternatively be arranged to use optic sensor, a magnet, a laser, laser, a potentiometer, or any other technique to measure angular rotation.

As mentioned before, the invention relates to a control system and method for detecting an absolute steering wheel angle $\delta$ in a steering wheel system for a vehicle. The steering wheel system comprises a steering wheel and a steering shaft coupled to the steering wheel. The steering wheel system also comprises a steering rack coupled to the steering shaft for changing direction of two road wheels upon motion. The steering rack may be coupled to the steering shaft via a first pinion gear for translation of the rotational movement of the steering shaft to a translatoric movement of the steering rack. The steering rack is coupled to road wheels for steering purposes of the vehicle upon movement of the steering rack by rotation of the steering wheel. The steering shaft may comprise a steering wheel column and a torsion bar and the first angle sensor may be positioned in connection to the steering wheel column or the torsion bar or the pinion gear.

The control system thus comprises a first angle sensor that outputs a first measurement signal $\Phi_1$ comprising information about a first angular rotation and a second angle sensor that outputs a second measurement signal $\Phi_2$ comprising information about a second angular rotation.

The invention is characterized in that the first and the second angle sensors are single turn sensors. The first angle sensor is positioned in a first measurement point in connection to the steering shaft for production of the first measurement signal $\Phi_1$ of the first angular rotation of the steering shaft and the second angle sensor is positioned in a second measurement point for production of the second measurement signal $\Phi_2$ in the steering wheel system for direct or indirect detection of movement of the steering rack upon rotation of the steering wheel.

The control system is arranged to store a predetermined transfer ratio $C_2/C_1$ between a value $C_2$ representing the gain of the second angle sensor and $C_1$ representing the gain of the first angle sensor. The transfer ratio $C_2/C_1$ being decided dependent on that there can be only one unique pair $n_{1,2}$ of number of revolutions $n_{1,2}$ of the first angle sensor and the second sensor respectively that satisfy ;

$$\frac{n_1}{C_1} - \frac{n_2}{C_2} = \frac{1}{360}\left(\frac{\phi_2}{C_2} - \frac{\phi_1}{C_1}\right). \tag{3}$$

if and only if

$$\nexists\ n_{1,2}^1 \neq n_{1,2}^2 \ \text{such that}\ C_2\left(n_1^1 - n_1^2\right) - C_1\left(n_2^1 - n_2^2\right) = 0 \tag{4}$$

and where the two measurements are written as:

$$\phi_1 = C_1\delta - 360 n_1 \tag{1}$$

$$\phi_2 = C_2\delta - 360 n_2 \tag{2}$$

One advantage of the invention is that the method and device according to the invention needs no counters and ideally needs only one measurement from each relative sensor in order to return the value of the original signal. The method is based on the mathematical properties of the space spanned by the measurements of the single turn sensors. Additionally, it is shown that by choosing the right transfer ratios the method is surprisingly robust, Moreover, and even more importantly, it is shown that two single turn sensors with double reading is sufficient for fault detection and Triple Modular Redundancy (TRM), directly at startup.

The second measuring point is advantageously positioned in connection to a servo motor being coupled to the steering rack for moving the steering rack upon rotation of the steering wheel. The second angle sensor is arranged for detection of the second angular rotation $\Phi_2$ of a part of the motor or a part being connected to the motor.

The motor is coupled to the steering rack, advantageously, via a second pinion gear for translation of the rotational movement of the motor to a translatoric movement of the steering rack. The motor advantageously comprises a motor shaft connecting the driving part of the motor with the steering rack, advantageously via the second pinion gear.

The motor is advantageously an electric motor, but may be driven by another power source. The second measurement point is advantageously positioned for measurement of the rotation of the outgoing shaft from the electric motor or the second pinion gear.

For a steering wheel angle $\delta$ interval of +/- 540 degrees, the ratio $C_2/C_1$ is in one of the below ranges for giving a play robustness of at least 20 degrees on $\Phi_2$ :

[19.38; 19.44]

[19.57; 19.62]

[19.71; 19.88]

[20.12; 20.29]

[20.38; 20.44]

[20.57; 20.66]

[20.71; 20.88]

[21.12; 21.33]

[21.38; 21.44]

[21.57; 21.62]

[21.71; 21.88]

Different points can be allowed if a different play robustness can be tolerated. Furthermore, if the steering wheel angle $\delta$ interval is more or less than +/-540 degrees, different ratios can be allowed. This will be evident from the examples shown below.

BRIEF DESCRIPTION OF DRAWINGS

The invention will be explained further in connection to a number of drawings, where;

Figure 1 shows a diagram over a subspace (referring to equation (4)) and a discrete space;

Figure 2 shows a diagram plotting transmission ratio versus uncertainty $\Phi_2$;

Figure 3 schematically shows a steering wheel system according to the invention;

Figure 4 shows robustness against play for +/- 540 steering wheel angle $\delta$, such that the correct $n_2$ and $n_1$ is still estimated;

Figure 5 shows estimate of steering wheel angle $\delta$ from $n_1$, and $\Phi_1$;

Figure 6 shows estimate of steering wheel angle $\delta$ from $n_2$, and $\Phi_2$, and where;

Figure 7 shows an enhanced part of figure 6.

EMBODIMENTS OF THE INVENTION

The system comprises of two single turn angle sensors, one on the steering shaft and the other on the electric motor used for the Electric Power Assisted Steering (EPAS) system. Between the two signals there is given ratio, which turns out to be crucial for the identifyability of the original, absolute steering wheel angle $\delta$ value. The two measurements can be written as:

$$\phi_1 = C_1\delta - 360n_1 \qquad\qquad (1)$$

$$\phi_2 = C_2\delta - 360n_2 \qquad\qquad (2)$$

where,

• $\Phi_{1,2}$ are the measurements from the sensors on the steering shaft and the electric motor, respectively.

• $C_{1,2}$ are the gains of the sensors on the steering shaft and the motor respectively. These parameters give the transfer ratio $C_2/C_1$ from the electric motor of the EPAS to the steering shaft.

• $n_{1,2}$ are the number of revolutions of the relative angle sensors on the steering shaft and the electric motor, respectively. The domains of definition for the number of revolutions are the discrete spaces $N_1$, $N_2$.

• $\delta$ is the steering wheel angle.

It is easy to see that if $\Phi_{1,2}$, and $C_{1,2}$ are known, then the steering wheel angle $\delta$ can be uniquely determined. Thus, the problem of finding $\delta$ translates to that of finding $n_{1,2}$.

From (1) and (2) resuts.

$$\frac{n_1}{C_1} - \frac{n_2}{C_2} = \frac{1}{360}\left(\frac{\phi_2}{C_2} - \frac{\phi_1}{C_1}\right). \qquad (3)$$

This means that, a unique pair $n_{1,2}$ can be found satisfying (3) if and only if $\nexists\ n_{1,2}^1 \neq n_{1,2}^2$ such that

$$C_2\left(n_1^1 - n_1^2\right) - C_1\left(n_2^1 - n_2^2\right) = 0 \qquad (4)$$

In other words, in the space formed by the revolution estimation error, the subspace given by (4) contains only the origin. Obviously, if the estimation error space is continuous, then this condition can not be fulfilled. However, in our case the space is discrete and linear, and it is therefore possible to find $C_{1,2}$ such that (4) contains only the origin.

This way it is easy to check graphically if a given pair $C_{1,2}$ and a given discrete space $N_1 \times N_2$ will allow the unique determination of the $n_{1,2}$ and thus $\delta$.

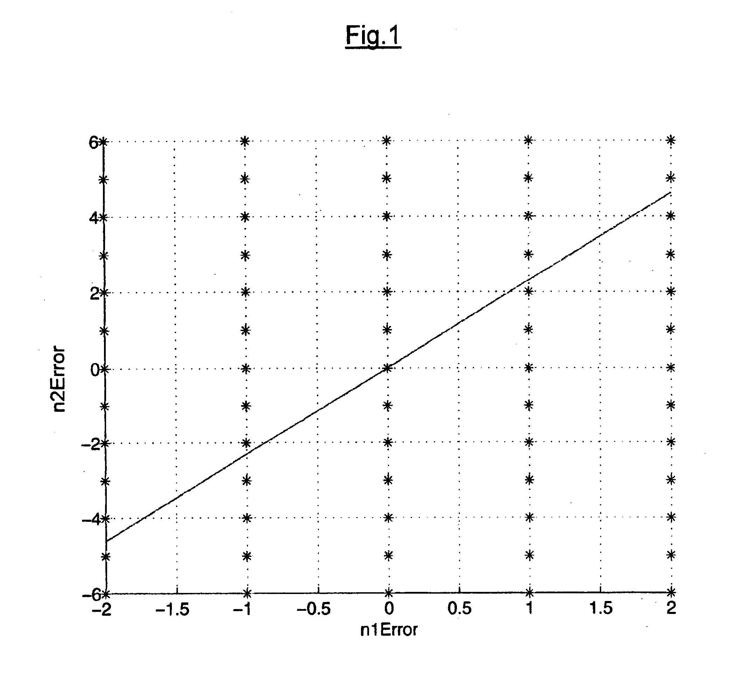

Consider the numerical example of the mentioned application, with $N_1$ ={-1,0,1} and similarly $N_2$ is the set of all integers between -3 and 3. Additionally, $C_1 = 1$ and $C_2 = 2.31$. The subspace, equation (4), and the discrete space are shown in Figure 1. Although the line passes close to the points of the set $N_1 \times N_2$ only the origin is on the line, i.e. the subspace contains only the origin and does not passes through any other points from the set $N_1 \times N_2$.

Although Figure 1 gives indication on the noise sensitivity of the algorithm depending on the number of points in the set $N_1 \times N_2$, one cannot draw any conclusion whether the algorithm can or cannot be used for a given signal to noise ratio of the measurements. For this an additional analysis should be carried out. Figure 1 is only a graphical proof of the fact that the choice of $N_1$, $N_2$, $C_1$, $C_2$ enables the unique determination of $n_1,n_2$ and in turns $\delta$.

Noise Sensitivity

Consider the case where the measurements $\Phi_{1,2}$ is affected by a zero mean white noise with standard deviations $\sigma_{1,2}$. Assuming that $N_1$, $N_2$, $C_1$, $C_2$ are adequately chosen, then the method can be used to uniquely determine $\delta$ if and only if there exist a $\Delta \geq 0$ such that:

$$360 \min_{n_{1,2}^i \in (N_1 \times N_2)^i} \left(\frac{n_1^1 - n_1^2}{C_1} - \frac{n_2^1 - n_2^2}{C_2}\right)^2 - \frac{\sigma_1}{C_1} - \frac{\sigma_2}{C_2} > \Delta \qquad (5)$$

Here $\Delta$ is a measure on the noise sensitivity of the algorithm. However, it is difficult to give a good value for $\Delta$ that will suffice to obtain a unique solution for the estimation problem. Moreover, $\Delta$ depends on the algorithm used to detect and resolve ambiguous combinations.

Therefore, in the following a more practical method is presented, where the standard deviation of the noise is sufficient to determine whether the estimation will be successful.

Assume that the closest-to-the-nearest-input method is used in the quantization of the left-hand-side of equation (3). Then the uncertainty in the right-hand-side should be smaller then half of the smallest quantization step for the left-hand side of equation (3). That is:

$$\xi > \frac{1}{180}\left(\frac{\sigma_1}{C_1} + \frac{\sigma_2}{C_2}\right) \qquad (6)$$

For the above used numerical values, the smallest quantization step is found to be 0.134, this means that:

$$\frac{\sigma_1}{C_1} + \frac{\sigma_2}{C_2} < 24.12$$

*Remark:* The same argument holds for any time varying errors with amplitudes $\sigma_{1,2}$. That is in the particular case of having a fixed transmission $C_1 = 1$ and $C_2 = 2.31$ with no errors on the $C_1$ side ($\sigma_1 = 0$), the algorithm is robust against any disturbance with amplitude smaller than 55.7172 degrees on the $C_2$ side.

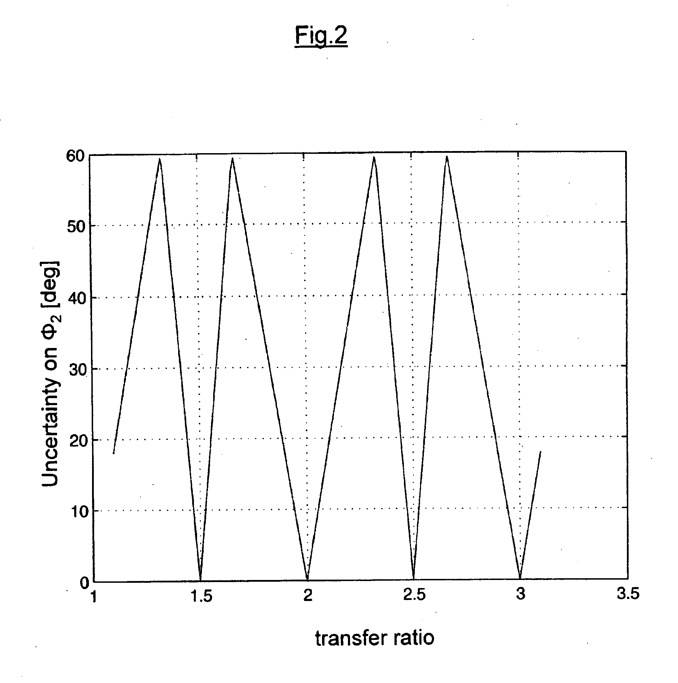

It is then straightforward to ask what are the optimal transmission ratios that will ensure maximum robustness, and what is the maximum uncertainty one can handle. This is a difficult optimisation problem, however, by fixing some of the parameters and bounding the space of the remaining free parameters, a simple exhaustive search can be used to find to optimal points. For the above example, fixing $C_1 = 1$ and assuming $\sigma_1 = 0$, Figure 2 shows the maximum uncertainty that can be handled by the algorithm and the respective transmission ratio $C_2$. The figure shows that for the given example an uncertainty of about 60 degrees on $\phi_2$ is acceptable if the transmission ratios are chosen correctly.

Redundancy

The steering wheel angle $\delta$ measurement or estimation is a safety critical system. This implies that specific requirements on redundancy have to be fulfilled. In particular, it is necessary that the system is able to determine whether one of its measurements is erroneous.

Assume that both signals $\phi_{1,2}$ are using two distinct measurements, that is, the pair $\phi_1^1, \phi_2^1$ and $\phi_1^2, \phi_2^2$, respectively. In order to always be able to detect a single fault, it should not be possible to find two pairs $\left(n_1^1, n_2^1\right)$ and $\left(n_1^2, n_2^2\right)$ that give the same $\zeta$. This is equivalent, in the single fault case, with finding the same pair $(n_1, n_2)$ for two different $\zeta$. The latter contradicts the uniqueness condition in equation (4). That is the method will detect single faults and a redundant estimation system can be built. The equivalence of the above mentioned two problems can be mathematically described as follows:

$$\begin{cases} \dfrac{n_1^1}{C_1} - \dfrac{n_2^1}{C_2} = \varsigma_1 \\[2ex] \dfrac{n_1^1}{C_1} - \dfrac{n_2^1}{C_2} = \varsigma_1 + \varepsilon \end{cases} \Leftrightarrow \begin{cases} \dfrac{n_1^1}{C_1} - \dfrac{n_2^1}{C_2} = \varsigma_1 \\[2ex] \dfrac{n_1^2}{C_1} - \dfrac{n_2^2}{C_2} = \varsigma_1 \end{cases}$$

Figure 2: The algorithm is robust against uncertainty on $\phi_2$ given by the plot for the given transmission ratio $C_2$. The maximum uncertainty that can be handled is about 60 degrees.

Conclusion

A method for determining the value of an absolute measurement from two relative measurements has been introduced. The method returns the correct result directly at startup. Triple Modular Redundancy (TRM) is also guaranteed if double reading is used.

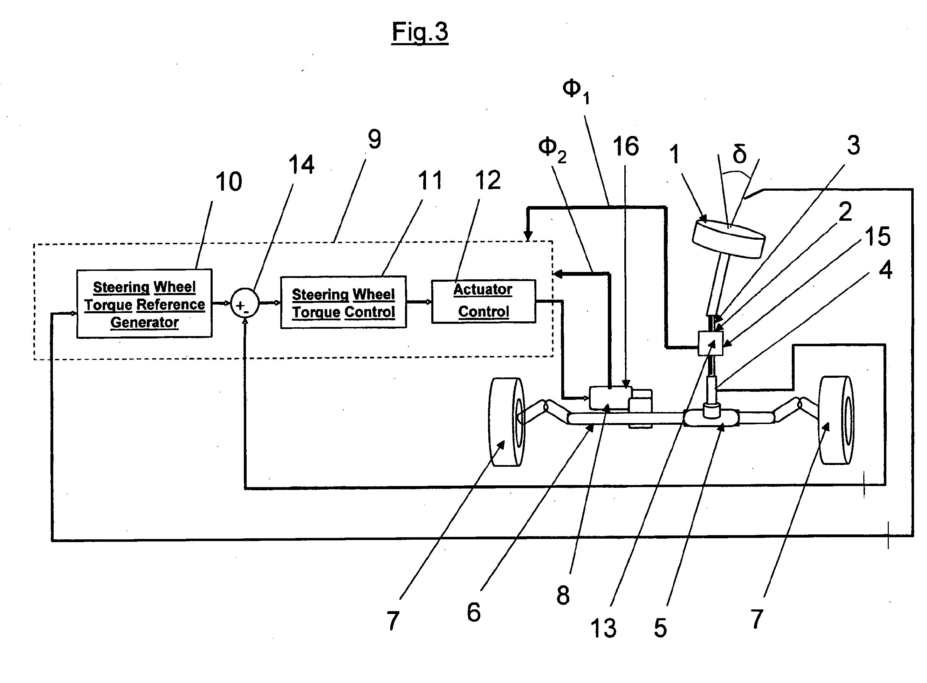

Figure 3 schematically shows a steering wheel arrangement comprising a steering wheel 1 connected to a steering shaft 2 comprising a steering wheel column 3 and a torsion bar 4. The steering shaft 2 is connected to a first pinion gear 5 via the torsion bar 4. The pinion gear 5 is connected to a steering rack 6 connected to two road wheels 7. A servo motor 8 is connected to the steering rack 6 for assisting a driver in steering the wheels 8 upon rotation of the steering wheel 1. The steering rack 6 performs a translatoric movement upon rotation of the steering wheel 1 by the servo motor 8 being arranged to rotate a gear wheel (not shown) connected to a gear rack (not shown) for transforming the rotational movement of the servo motor 8 into the translatoric movement of the steering rack 6. The servo motor 8 is part of a system called Electric Power Assisted Steering (EPAS) which is controlled by a control unit 9. The control unit 9 comprises a control system comprising a steering wheel torque reference generator 10 connected to a steering wheel torque control 11 and an actuator control 12. The steering wheel angle $\delta$, i.e. the rotation of the steering wheel 1 is used in the control system. The steering wheel angle $\delta$ is fed to the steering wheel torque reference generator 9. A torsion bar torque sensor 13 is positioned in connection to the torsion bar 3 for detection of the torque of the torsion bar 3 upon rotation of the steering wheel 1. The torsion bar torque sensor 13 is connected to a summation point 14. The summation point 14 brings together an output from the steering wheel torque reference generator 10 and the signal from the torsion bar torque sensor 13. An output from the steering wheel torque control 11 is fed to the actuator control 12 for control of the servo motor 8.

A first single turn angle sensor 15 is positioned in relation to the steering shaft 2 for detection of rotation of the steering shaft 2. The first angle sensor 15 feeds a first output signal $\Phi_1$ to the control unit 8. The first output signal $\Phi_1$ comprises information about the angular movement of the steering wheel shaft 2, i.e. the angular rotation of the steering shaft 2. Here, the steering shaft 2 comprises the steering wheel column 3 and the torsion bar 4, which means that the first sensor 15 can be positioned in connection to any part of the steering shaft 2, for example in connection to the torsion bar 4. One advantage of this is that the torsion bar torque sensor 13 and the first sensor 15 can be manufactured and assembled in one package.

A second single turn angle sensor 16 is positioned in relation to the servo motor 8, i.e. an electric motor used for the Electric Power Assisted Steering (EPAS) system, for detection of rotation of the electric motor. The second angle sensor 16 feeds a second output signal to the control unit 9. The second output signal S2 comprises information about the angular movement of the servo motor 8, i.e. the rotation of the servo motor 8. The second sensor 16 may be positioned in connection to any part of the servo motor 8 that rotates, advantageously the motor shaft, as long as the movement of the steering rack 6 is measured. The second sensor 16 can also be positioned for direct measurement of the steering rack 6, but for this arrangement the translatoric movement has to be converted into a corresponding angular movement for the above equations to work. Hence, the second sensor shall be positioned for direct or indirect measurement of the steering rack movement.

The control unit 8 uses the first and the second signals S1, S2 for calculating the absolute steering wheel angle $\delta$ from the measured values $\phi_{1,2}$ and knowledge about the transfer ratio $C_2/C_1$ from the electric motor to the steering shaft.

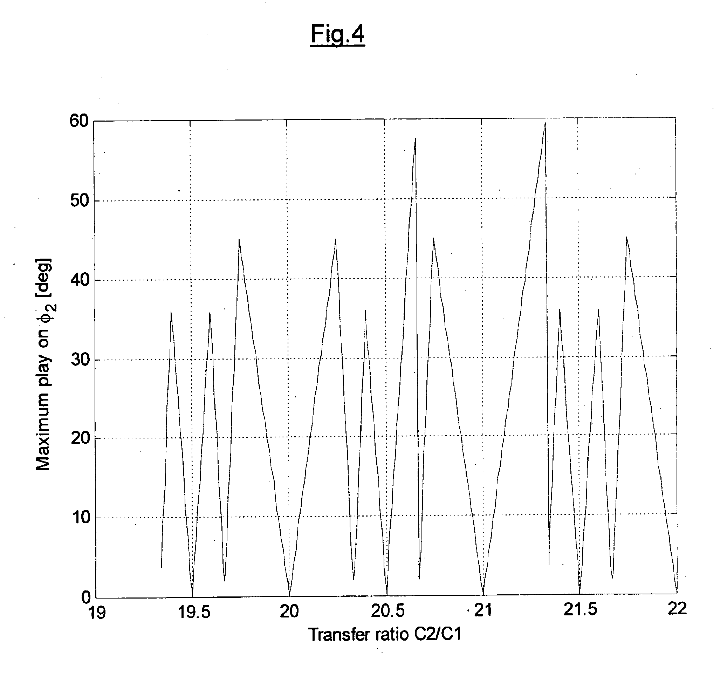

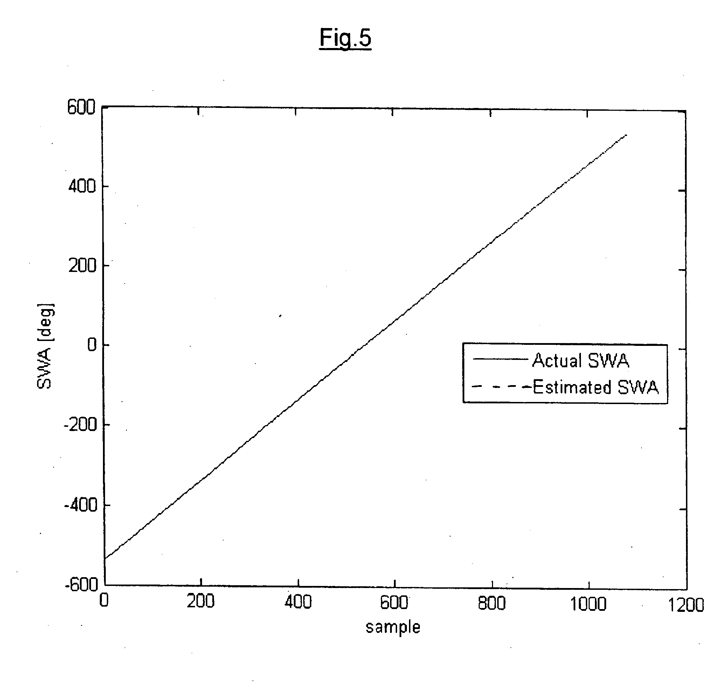

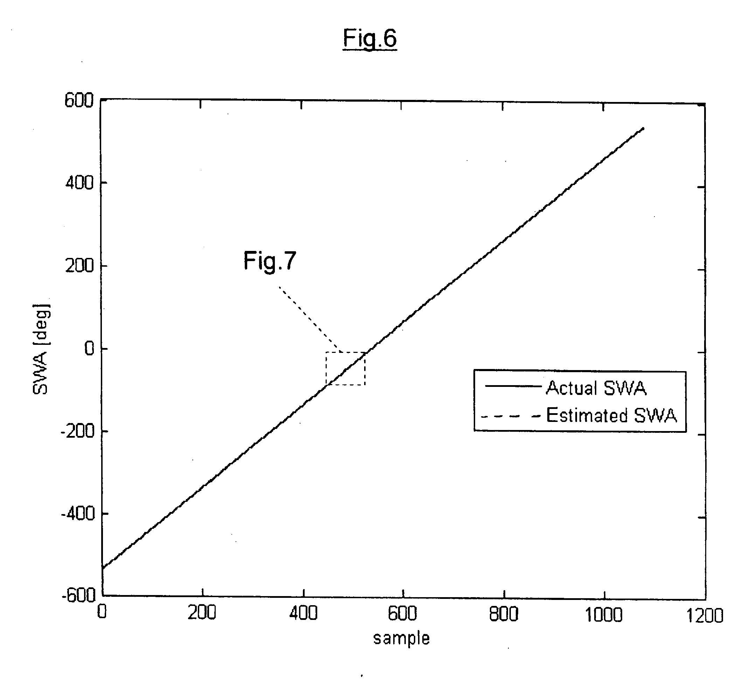

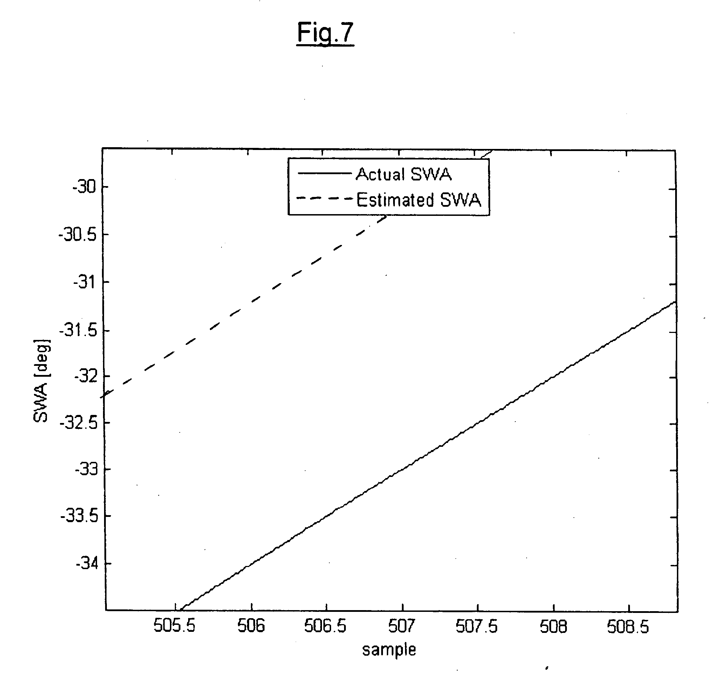

The following text shall be read in conjunction with figure 4 showing robustness against play for +/- 540 steering wheel angle $\delta$, such that the correct $n_2$ and $n_1$ is still estimated, and figure 5 showing estimate of steering wheel angle $\delta$ from $n_1$, and $\phi_1$; and figure 6 showing estimate of steering wheel angle $\delta$ from $n_2$, and $\phi_2$, and figure 7 being an enhanced part of figure 6. In the drawings SWA refers to Steering Wheel Angle.

In the previous analysis additive noise sensitivity has been studied. While this is a good approximation of a wide range of disturbances, it is useful to point out that play in the gear would also be covered by this analysis. That is, $\sigma_i$ can be viewed as play in the gear.

Another type of uncertainty that can affect the system is on the ratios themselves, that is:

$$ C_i = C_{iN} + \widetilde{C}_i $$

Where $C_{iN}$ are the nominal ratios and $\widetilde{C}_i$ is the error. This will in turns imply that inequality (6) will be modified as follows:

$$\xi > \frac{1}{180}\left(\frac{\sigma_1 + \delta\,\widetilde{C}_1}{C_1} + \frac{\sigma_2 + \delta\,\widetilde{C}_2}{C_2}\right)$$

Where $\sigma_i$ can be viewed as play in the gear and $\widetilde{C}_i$ are errors due to tolerances on the steering rack.

Estimation of Play and ratio tolerances:

In a production vehicle, the first sensor 15 installed directly on the steering column, will imply that $C_1 = 1$. Now assuming that there is no offset in mounting the sensor, or that this is compensated for with additional algorithm, it is easy to estimate from equation (1) and

$$\phi_2 = C_2\,\delta - 360\,n_2 + \sigma_2 + \delta\,\widetilde{C}_2 \qquad (7)$$

the play $\sigma_2$ and the tolerance $\widetilde{C}_2$. An appropriate algorithm is recursive least squares. Of course this is conditioned by correct estimates of $n_i$, e.g. by the algorithm proposed in this work.

Moreover, in case of play or mounting error $\sigma_1$ and tolerances on $C_1$ it is possible to estimate these values as well from

$$\phi_1 = C_1\,\delta - 360\,n_1 + \sigma_1 + \delta\,\widetilde{C}_1 \qquad (8)$$

in parallel with the unknowns in equation (7) however the convergence might be slower. Also here recursive least squares can be used. The successful estimation is conditioned by correct estimates of $n_i$, e.g. by the algorithm already proposed.

Numerical Examples and Simulation Results:

A more relevant numerical example is for a steering system where the steering wheel angle $\delta$ varies in the range of $\pm 540$ degrees, that is 1.5 revolutions. Then for $\phi_2$ the following intervals for $C_2$ correspond to the number of turns $n_2$:

- 60 turns: [19.34 20]

- 62 turns: [20.01 20.66]

- 64 turns : [20.67 21.33]

- 66 turns : [21.34 22]

and the robustness against play measured on $\phi_2$ is given in Figure 4.

From figure 4 it is evident that for a steering wheel angle $\delta$ interval of +/- 540 degrees, the following ratio intervals will give a play robustness of at least 20 degrees on $\phi_2$.

[19.38; 19.44]

[19.57; 19.62]

[19.71; 19.88]

[20.12; 20.29]

[20.38; 20.44]

[20.57; 20.66]

[20.71; 20.88]

[21.12; 21.33]

[21.38; 21.44]

[21.57; 21.62]

[21.71; 21.88]

It is obvious from figure 4 the system can be used outside these ratios for play robustness of less than 20 degrees, if the manufacturer of the vehicle can allow this.

Figure 5 and 6 show simulation results for $C_2$=20.66 and $C_1$=1 and an offset of 57.5 degrees on $\phi_2$. Observe that the correct $n_1$ and $n_2$ are estimated on the entire range of +/- 540 deg. steering wheel angle $\delta$, and the play will still be present in the estimated steering wheel angle $\delta$ from $\phi_2$.

In Figure 5 the estimated steering wheel angle $\delta$ based on $\phi_1$, and the actual steering wheel angle $\delta$ are identical while in Figure 6 there is an error due to the introduced play introduced in $\phi_2$. That is, since the correct $n_1$ and $n_2$ are identified the play can also be identified from $\phi_1$ and $\phi_2$; and can therefore compensated for.

Figure 7 shows an enhanced part of figure 6 in which the error can be seen more clearly than in figure 6.

**Claims**

1. A control system (9) for detecting an absolute steering wheel angle $\delta$ in a steering wheel system for a vehicle, the steering wheel system comprising a steering wheel (1) and a steering shaft (2) coupled to the steering wheel (1) and a steering rack (6) coupled to the steering shaft (2) for changing direction of two road wheels (7) upon motion, the control system (9) also comprising a first angle sensor (15) arranged to output a first measurement signal $\Phi_1$ comprising information about a first angular rotation and a second angle sensor (16) arranged to output a second measurement signal $\Phi_2$ comprising information about a second angular rotation, the first and the second angle sensors (15, 16) are single turn sensors, the first angle sensor (15) being positioned in a first measurement point in connection to the steering shaft (2) for production of the first measurement signal $\Phi_1$ of the first angular rotation of the steering shaft (2) and the second angle sensor (16) being positioned in a second measurement point for production of the second measurement signal $\Phi_2$ in the steering wheel system for direct or indirect detection of movement of the steering rack (6) upon rotation of the steering wheel (1), **characterized in that** the control system (9) is arranged to store a predetermined transfer ratio $C_2/C_1$ between a value $C_2$ representing the gain of the second angle sensor (16) and $C_1$ representing the gain of the first angle sensor (15), the transfer ratio $C_2/C_1$ being decided dependent on that there can be only one unique pair $n_{1,2}$ of number of revolutions $n_{1,2}$ of the first angle sensor and the second sensor respectively that satisfy ;

$$\frac{n_1}{C_1} - \frac{n_2}{C_2} = \frac{1}{360}\left(\frac{\phi_2}{C_2} - \frac{\phi_1}{C_1}\right). \qquad (3)$$

if and only if

$$\nexists \; n_{1,2}^1 \neq n_{1,2}^2 \text{ such that } C_2\left(n_1^1 - n_1^2\right) - C_1\left(n_2^1 - n_2^2\right) = 0 \qquad (4)$$

, where the superscript 1 and 2 refer to two different measurements in time and where the subscript 1 and 2 refer to measurements on the steering shaft and direct or indirect detection of movement of the steering rack respectively, wherein the domains of definition for the number of revolutions are the discrete and linear spaces $N_1$ and $N_2$, and wherein in the space formed by a revolution estimation error, the subspace given by equation (4) contains only the origin, and because the space is discrete and linear the ratio $C_2/C_1$ can be decided such that equation (4) contains only the origin which for a given space $N_1$ x $N_2$ gives a unique and direct determination of the rotations $n_{1,2}$ and thus the absolute steering wheel angle $\delta$,
and where the two measurements are written as:

$$\phi_1 = C_1\delta - 360n_1 \qquad\qquad (1)$$

$$\phi_2 = C_2\delta - 360n_2 \qquad\qquad (2)$$

, and wherein the absolute steering wheel angle $\delta$ is derived from either of the equation (1) or (2).

2. A control system (9) according to claim 1, **characterized in that** the second measuring point is positioned in connection to a servo motor (8) being coupled to the steering rack (6) for moving the steering rack (6) upon rotation of the steering wheel (1), the second angle sensor (16) being arranged for detection of the second angular rotation $\Phi_2$ of the motor (8)

3. A control system (9) according to claim 2, **characterized in that** the motor is (8) an electric motor (8).

4. A control system (9) according to claim 2 or 3, **characterized in that** the second measurement point is positioned for measurement of the rotation of an outgoing shaft from the electric motor (8).

5. A control system (9) according to any one of the preceding claims, **characterized in that** the first and the second angle sensors (15, 16) reports the measurement of a rotational motion as a modulo 360 value.

6. A control system (9) according to any one of the preceding claims, **characterized in that** the steering rack (6) is coupled to the steering shaft (2) via a pinion gear (5) for translation of the rotational movement of the steering shaft (2) to a translatoric movement of the steering rack (6).

7. A control system (9) according to claim 6, **characterized in that** the steering rack (6) is coupled to road wheels (7) for steering purposes of the vehicle upon movement of the steering (6) rack by rotation of the steering wheel (1).

8. A control system (9) according to claim 7, **characterized in that** the steering shaft (2) comprises a steering wheel column (3) and a torsion bar (4), and that the first angle sensor (15) is positioned in connection to the steering wheel column (3) or the torsion bar (4).

9. A control system (9) according to any one of the preceding claims, **characterized in that**, for a steering wheel angle $\delta$ interval of +/- 540 degrees, the ratio $C_2/C_1$ is in one of the below ranges for giving a play robustness of at least 20 degrees on $\phi_2$ :

   [19.38; 19.44]
   [19.57; 19.62]
   [19.71; 19.88]
   [20.12; 20.29]
   [20.38; 20.44]
   [20.57; 20.66]
   [20.71; 20.88]
   [21.12; 21.33]
   [21.38; 21.44]

[21.57; 21.62]
[21.71; 21.88]

10. A method for a control system (9) for detecting an absolute steering wheel angle $\delta$ in a steering wheel system for a vehicle, the steering wheel system comprising a steering wheel (1) and a steering shaft (2) coupled to the steering wheel (1) and a steering rack (6) coupled to the steering shaft (2) for changing direction of two road wheels (7) upon motion, the control system (9) also comprising a first angle sensor (15) that outputs a first measurement signal $\Phi_1$ comprising information about a first angular rotation and a second angle sensor (16) that outputs a second measurement signal $\Phi_2$ comprising information about a second angular rotation, that the first and the second angle sensors (15, 16) are single turn sensors, the first angle sensor (15) being positioned in a first measurement point in connection to the steering shaft (2) for production of the first measurement signal $\Phi_1$ of the first angular rotation of the steering shaft (2) and the second angle sensor (16) being positioned in a second measurement point for production of the second measurement signal $\Phi_2$ in the steering wheel system for direct or indirect detection of movement of the steering rack (6) upon rotation of the steering wheel (1), **characterized in** the method comprises the step of storing a predetermined transfer ratio $C_2/C_1$ between a value $C_2$ representing the gain of the second angle sensor (16) and $C_1$ representing the gain of the first angle sensor (15) in the control system (9), the method comprising the step of deciding the transfer ratio $C_2/C_1$ dependent on that there can be only one unique pair $n_{1,2}$ of number of revolutions $n_{1,2}$ of the first angle sensor and the second sensor respectively that satisfy ;

$$\frac{n_1}{C_1} - \frac{n_2}{C_2} = \frac{1}{360}\left(\frac{\phi_2}{C_2} - \frac{\phi_1}{C_1}\right). \qquad (3)$$

if and only if

$$\nexists\ n_{1,2}^1 \neq n_{1,2}^2 \text{ such that } C_2\left(n_1^1 - n_1^2\right) - C_1\left(n_2^1 - n_2^2\right) = 0 \qquad (4)$$

, where the superscript 1 and 2 refer to two different measurements in time and where the subscript 1 and 2 refer to measurements on the steering shaft and direct or indirect detection of movement of the steering rack respectively, wherein the domains of definition for the number of revolutions are the discrete and linear spaces $N_1$ and $N_2$, and wherein in the space formed by a revolution estimation error, the subspace given by equation (4) contains only the origin, and because the space is discrete and linear the ratio $C_2/C_1$ can be decided such that equation (4) contains only the origin which for a given space $N_1$ x $N_2$ gives a unique and direct determination of the rotations $n_{1,2}$ and thus the absolute steering wheel angle $\delta$,
and where the two measurements are written as:

$$\phi_1 = C_1\delta - 360n_1 \qquad (1)$$

$$\phi_2 = C_2\delta - 360n_2 \qquad (2)$$

, and wherein the absolute steering wheel angle $\delta$ is derived from either of the equations (1) or (2).

11. A method according to claim 10, **characterized in that** the second measuring point is positioned in connection to a servo motor (8) being coupled to the steering rack (6) for moving the steering rack (6) upon rotation of the steering wheel (1), the second angle sensor (16) detecting the second angular rotation $\Phi_2$ of the motor (8)

12. A method according to claim 11, **characterized in that** the motor is (8) an electric motor (8).

**13.** A method according to claim 11 or 12, **characterized in that** the second measurement point is positioned for measurement of the rotation of an outgoing shaft from the electric motor (8).

**14.** A method according to any one of claims 10-13, **characterized in that** the first and the second angle sensors (15, 16) reports the measurement of a rotational motion as a modulo 360 value.

**15.** method according to any one of claims 10-14, **characterized in that** the steering rack (6) is coupled to the steering shaft (2) via a pinion gear (5) for translation of the rotational movement of the steering shaft (2) to a translatoric movement of the steering rack (6).

**16.** A method according to claim 16, **characterized in that** the steering rack (6) is coupled to road wheels (7) for steering purposes of the vehicle upon movement of the steering (6) rack by rotation of the steering wheel (1).

**17.** A method according to claim 16, **characterized in that** the steering shaft (2) comprises a steering wheel column (3) and a torsion bar (4), and that the first angle sensor (15) is positioned in connection to the steering wheel column (3) or the torsion bar (4).

**18.** A method according to any one of claims 10-17, **characterized in that**, for a steering wheel angle $\delta$ interval of +/- 540 degrees, the ratio $C_2/C_1$ is in one of the below ranges for giving a play robustness of at least 20 degrees on $\phi_2$ :

[19.38; 19.44]
[19.57; 19.62]
[19.71; 19.88]
[20.12; 20.29]
[20.38; 20.44]
[20.57; 20.66]
[20.71; 20.88]
[21.12; 21.33]
[21.38; 21.44]
[21.57; 21.62]
[21.71; 21.88].

**Patentansprüche**

**1.** Steuersystem (9) zum Erfassen eines absoluten Lenkradwinkels $\delta$ in einem Lenkradsystem für ein Fahrzeug, wobei das Lenkradsystem ein Lenkrad (1) und eine mit dem Lenkrad (1) gekoppelte Lenkwelle (2) und eine mit der Lenkwelle (2) zum Ändern einer Richtung von zwei Straßenrädern (7) bei Bewegung gekoppelte Zahnstange (6) umfasst, wobei das Steuersystem (9) ebenso einen ersten Winkelsensor (15) umfasst, der ein eine Information über eine erste Winkeldrehung umfassendes erstes Messsignal $\phi_1$ ausgeben kann, und einen zweiten Winkelsensor (16) umfasst, der ein eine Information über eine zweite Winkeldrehung umfassendes zweites Messsignal $\phi_2$ ausgeben kann, wobei der erste und der zweite Winkelsensor (15, 16) Einfachdrehsensoren sind, wobei der erste Winkelsensor (15) in einem ersten Messpunkt in Verbindung zur Lenkwelle (2) zur Erzeugung des ersten Messsignals $\phi_1$ der ersten Winkeldrehung der Lenkwelle (2) positioniert ist, und der zweite Winkelsensor (16) in einem zweiten Messpunkt zur Erzeugung des zweiten Messsignals $\phi_2$ im Lenkradsystem für eine direkte oder indirekte Erfassung der Bewegung der Zahnstange (6) bei Drehung des Lenkrads (1) positioniert ist,
**dadurch gekennzeichnet, dass**
das Steuersystem (9) ein vorbestimmtes Übertragungsverhältnis $C_2/C_1$ zwischen einem die Verstärkung des zweiten Winkelsensors (16) repräsentierenden Werts $C_2$ und einem die Verstärkung des ersten Winkelsensors (15) repräsentierenden $C_1$ speichern kann, wobei das Übertragungsverhältnis $C_2/C_1$ abhängig davon entschieden wird, dass es lediglich ein einziges Paar $n_{1,2}$ der Anzahl der Umdrehungen $n_{1,2}$ des ersten Winkelsensors und des zweiten Winkelsensors entsprechend geben kann, das erfüllt:

$$\frac{n_1}{C_1} - \frac{n_2}{C_2} = \frac{1}{360}\left(\frac{\phi_2}{C_2} - \frac{\phi_1}{C_1}\right). \qquad (3)$$

wenn, und lediglich wenn

$$\nexists \quad n_{1,2}^1 \neq n_{1,2}^2$$

so dass

$$C_2\left(n_1^1 - n_1^2\right) - C_1\left(n_2^1 - n_2^2\right) = 0 \qquad (4)$$

wobei der Exponent 1 und 2 zwei verschiedene Messungen in einer Zeit betrifft, und wobei der Exponent 1 und 2 Messungen an der Lenkwelle und entsprechend eine direkte oder indirekte Erfassung der Bewegung der Zahnstange betrifft,
wobei die Bereiche der Definition für die Anzahl der Umdrehungen die diskreten und linearen Räume $N_1$ und $N_2$ sind, und wobei in dem durch einen Umdrehungsschätzfehler ausgebildeten Raum der durch die Gleichung (4) gegebene Unterraum lediglich den Ursprung enthält, und weil der Raum diskret und linear ist, kann das Verhältnis $C_2/C_1$ derart entschieden werden, dass die Gleichung (4) lediglich den Ursprung enthält, weshalb ein gegebener Raum $N_1 \times N_2$ eine einzige und direkte Bestimmung der Drehungen $n_{1,2}$ und somit den absoluten Lenkradwinkel $\delta$ ergibt,
und wo die zwei Messungen beschrieben werden als:

$$\phi_1 = C_1\delta - 360 n_1 \qquad (1)$$

$$\phi_2 = C_2\delta - 360 n_2 \qquad (2)$$

und wobei der absolute Lenkradwinkel $\delta$ aus entweder der Gleichung (1) oder (2) abgeleitet wird.

2. Steuersystem (9) gemäß Anspruch 1, **dadurch gekennzeichnet, dass** der zweite Messpunkt in Verbindung mit einem Servomotor (8) positioniert ist, der mit der Zahnstange (6) zum Bewegen der Zahnstange (6) bei Drehung des Lenkrads (1) gekoppelt ist, wobei der zweite Winkelsensor (16) zur Erfassung der zweiten Winkeldrehung $\phi_2$ des Motors (8) eingerichtet ist.

3. Steuersystem (9) gemäß Anspruch 2, **dadurch gekennzeichnet, dass** der Motor (8) ein Elektromotor (8) ist.

4. Steuersystem (9) gemäß Anspruch 2 oder 3, **dadurch gekennzeichnet, dass** der zweite Messpunkt zur Messung der Drehung einer Ausgangswelle des Elektromotors (8) positioniert ist.

**5.** Steuersystem (9) gemäß einem der vorangegangenen Ansprüche, **dadurch gekennzeichnet, dass** der erste und der zweite Winkelsensor (15, 16) die Messung einer Drehbewegung als einen Modulo-360-Wert melden.

**6.** Steuersystem (9) gemäß einem der vorangegangenen Ansprüche, **dadurch gekennzeichnet, dass** die Zahnstange (6) für eine Übersetzung der Drehbewegung der Lenkwelle (2) auf eine translatorische Bewegung der Zahnstange (6) über ein Ritzel (5) mit der Lenkwelle (2) gekoppelt ist.

**7.** Steuersystem (9) gemäß Anspruch 6, **dadurch gekennzeichnet, dass** die Zahnstange (6) für Lenkzwecke des Fahrzeugs bei Bewegung der Zahnstange (6) durch eine Drehung des Lenkrads (1) mit Straßenrädern (7) gekoppelt ist.

**8.** Steuersystem (9) gemäß Anspruch 7, **dadurch gekennzeichnet, dass** die Lenkwelle (2) eine Lenkradsäule(3) und eine Torsionsstange (4) umfasst, und **dadurch**, dass der erste Winkelsensor (15) in Verbindung mit der Lenkradsäule (3) oder der Torsionsstange (4) positioniert ist.

**9.** Steuersystem (9) gemäß einem der vorangegangenen Ansprüche, **dadurch gekennzeichnet, dass** für ein Intervall des Lenkradwinkels $\delta$ von +/-540 Grad das Verhältnis $C_2/C_1$ einer der nachfolgenden Bereiche ist, um eine Spielrobustheit von zumindest 20 Grad auf $\phi_2$ zu verleihen:

[19, 38; 19,44]
[19, 57; 19, 62]
[19, 71; 19,88]
[20, 12; 20, 29]
[20, 38; 20, 44]
[20, 57; 20, 66]
[20, 71; 20, 88]
[21, 12; 21, 33]
[21, 38; 21, 44]
[21, 57; 21, 62]
[21, 71; 21, 88]

**10.** Verfahren für ein Steuersystem (9) zum Erfassen eines absoluten Lenkradwinkels $\delta$ in einem Lenkradsystem für ein Fahrzeug, wobei das Lenkradsystem ein Lenkrad (1) und eine mit dem Lenkrad (1) gekoppelte Lenkwelle (2) und eine mit der Lenkwelle (2) zum Ändern einer Richtung von zwei Straßenrädern (7) bei Bewegung gekoppelte Zahnstange (6) umfasst, wobei das Steuersystem (9) ebenso einen ersten Winkelsensor (15) umfasst, der ein eine Information über eine erste Winkeldrehung umfassendes erstes Messsignal $\phi_1$ ausgibt, und einen zweiten Winkelsensor (16) umfasst, der ein eine Information über eine zweite Winkeldrehung umfassendes zweites Messsignal $\phi_2$ ausgibt, dass der erste und der zweite Winkelsensor (15, 16) Einfachdrehsensoren sind, wobei der erste Winkelsensor (15) in einem ersten Messpunkt in Verbindung zur Lenkwelle (2) zur Erzeugung des ersten Messsignals $\phi_1$ der ersten Winkeldrehung der Lenkwelle (2) positioniert ist, und der zweite Winkelsensor (16) in einem zweiten Messpunkt zur Erzeugung des zweiten Messsignals $\phi_2$ im Lenkradsystem für eine direkte oder indirekte Erfassung der Bewegung der Zahnstange (6) bei Drehung des Lenkrads (1) positioniert ist,
**dadurch gekennzeichnet, dass**
das Verfahren den Schritt des Speicherns eines vorbestimmtes Übertragungsverhältnis $C_2/C_1$ zwischen einem die Verstärkung des zweiten Winkelsensors (16) repräsentierenden Werts $C_2$ und einem die Verstärkung des ersten Winkelsensors (15) im Steuersystem (9) repräsentierenden $C_1$ umfasst, wobei das Verfahren den Schritt des Entscheidens des Übertragungsverhältnisses $C_2/C_1$ abhängig davon umfasst, dass es lediglich ein einziges Paar $n_{1,2}$ der Anzahl der Umdrehungen $n_{1,2}$ des ersten Winkelsensors und des zweiten Winkelsensors entsprechend geben kann, das erfüllt:

$$\frac{n_1}{C_1} - \frac{n_2}{C_2} = \frac{1}{360}\left(\frac{\phi_2}{C_2} - \frac{\phi_1}{C_1}\right). \tag{3}$$

wenn, und lediglich wenn

$$\nexists\ n_{1,2}^{1} \neq n_{1,2}^{2}$$

so dass

$$C_2\left(n_1^1 - n_1^2\right) - C_1\left(n_2^1 - n_2^2\right) = 0 \qquad (4)$$

wobei der Exponent 1 und 2 zwei verschiedene Messungen in einer Zeit betrifft, und wobei der Exponent 1 und 2 Messungen an der Lenkwelle und entsprechend eine direkte oder indirekte Erfassung der Bewegung der Zahnstange betrifft,

wobei die Bereiche der Definition für die Anzahl der Umdrehungen die diskreten und linearen Räume $N_1$ und $N_2$ sind, und wobei in dem durch einen Umdrehungsschätzfehler ausgebildeten Raum der durch die Gleichung (4) gegebene Unterraum lediglich den Ursprung enthält, und weil der Raum diskret und linear ist, kann das Verhältnis $C_2/C_1$ derart entschieden werden, dass die Gleichung (4) lediglich den Ursprung enthält, weshalb ein gegebener Raum $N_1$ x $N_2$ eine einzige und direkte Bestimmung der Drehungen $n_{1,2}$ und somit den absoluten Lenkradwinkel $\delta$ ergibt,

und wo die zwei Messungen beschrieben werden als:

$$\phi_1 = C_1\delta - 360n_1 \qquad (1)$$

$$\phi_2 = C_2\delta - 360n_2 \qquad (2)$$

und wobei der absolute Lenkradwinkel $\delta$ aus entweder der Gleichung (1) oder (2) abgeleitet wird.

**11.** Verfahren gemäß Anspruch 10, **dadurch gekennzeichnet, dass** der zweite Messpunkt in Verbindung mit einem Servomotor (8) positioniert ist, der mit der Zahnstange (6) zum Bewegen der Zahnstange (6) bei Drehung des Lenkrads (1) gekoppelt ist, wobei der zweite Winkelsensor (16) die zweite Winkeldrehung $\phi_2$ des Motors (8) erfasst.

**12.** Verfahren gemäß Anspruch 11, **dadurch gekennzeichnet, dass** der Motor (8) ein Elektromotor (8) ist.

**13.** Verfahren gemäß Anspruch 11 oder 12, **dadurch gekennzeichnet, dass** der zweite Messpunkt zur Messung der Drehung einer Ausgangswelle des Elektromotors (8) positioniert ist.

**14.** Verfahren gemäß einem der Ansprüche 10-13, **dadurch gekennzeichnet, dass** der erste und der zweite Winkelsensor (15, 16) die Messung einer Drehbewegung als einen Modulo-360-Wert melden.

**15.** Verfahren gemäß einem der Ansprüche 10-14, **dadurch gekennzeichnet, dass** die Zahnstange (6) für eine Übersetzung der Drehbewegung der Lenkwelle (2) auf eine translatorische Bewegung der Zahnstange (6) über ein Ritzel (5) mit der Lenkwelle (2) gekoppelt ist.

**16.** Verfahren gemäß Anspruch 16, **dadurch gekennzeichnet, dass** die Zahnstange (6) für Lenkzwecke des Fahrzeugs bei Bewegung der Zahnstange (6) durch eine Drehung des Lenkrads (1) mit Straßenrädern (7) gekoppelt ist.

**17.** Verfahren gemäß Anspruch 16, **dadurch gekennzeichnet, dass** die Lenkwelle (2) eine Lenkradsäule(3) und eine Torsionsstange (4) umfasst, und **dadurch**, dass der erste Winkelsensor (15) in Verbindung mit der Lenkradsäule (3) oder der Torsionsstange (4) positioniert ist.

**18.** Verfahren gemäß einem der Ansprüche 10-17, **dadurch gekennzeichnet, dass** für ein Intervall des Lenkradwinkels $\delta$ von +/-540 Grad das Verhältnis $C_2/C_1$ eines der nachfolgenden Bereiche ist, um eine Spielrobustheit von zumindest 20 Grad auf $\phi_2$ zu verleihen:

[19,38; 19,44]
[19, 57; 19, 62]
[19,71; 19,88]
[20, 12; 20, 29]
[20, 38; 20, 44]
[20, 57; 20, 66]
[20, 71; 20, 88]
[21, 12; 21, 33]
[21, 38; 21, 44]
[21, 57; 21, 62]
[21, 71; 21, 88]

**Revendications**

**1.** Système de commande (9) pour détecter un angle absolu de volant de direction $\delta$ dans un système de volant de direction pour un véhicule, le système de volant de direction comprenant un volant de direction (1) et un arbre de direction (2) couplé au volant de direction (1) et une crémaillère (6) couplée à l'arbre de direction (2) pour changer la direction de deux roues (7) lors d'un mouvement, le système de commande (9) comprenant également un premier capteur angulaire (15) agencé pour délivrer un premier signal de mesure $\Phi_1$ comprenant une information concernant une première rotation angulaire et un deuxième capteur angulaire (16) agencé pour délivrer un deuxième signal de mesure $\Phi_2$ comprenant une information concernant une deuxième rotation angulaire, les premier et deuxième capteurs angulaires (15, 16) sont des capteurs à un seul tour, le premier capteur angulaire (15) étant positionné dans un premier point de mesure en relation à l'arbre de direction (2) pour la production du premier signal de mesure $\Phi_1$ de la première rotation angulaire de l'arbre de direction (2) et le deuxième capteur angulaire (16) étant positionné dans un deuxième point de mesure pour la production du deuxième signal de mesure $\Phi_2$ dans le système de volant de direction pour la détection directe ou indirecte du mouvement de la crémaillère (6) lors de la rotation du volant de direction (1), **caractérisé en ce que** le système de commande (9) est agencé pour stocker un rapport de transfert prédéterminé $C_2/C_1$ entre une valeur $C_2$ représentant le gain du deuxième capteur angulaire (16) et $C_1$ représentant le gain du premier capteur angulaire (15), le rapport de transfert $C_2/C_1$ étant décidé en fonction du fait qu'il ne peut exister qu'une seule paire unique $n_{1,2}$ de nombre de révolutions $n_{1,2}$ du premier capteur angulaire et du deuxième capteur respectivement qui satisfasse :

$$\frac{n_1}{C_1} - \frac{n_2}{C_2} = \frac{1}{360}\left(\frac{\phi_2}{C_2} - \frac{\phi_1}{C_1}\right). \qquad (3)$$

si et seulement si

$$\nexists\; n^1_{1,2} \neq n^2_{1,2} \text{ de sorte que } C_2\left(n^1_1 - n^2_1\right) - C_1\left(n^1_2 - n^2_2\right) = 0 \qquad (4)$$

où les exposants 1 et 2 désignent deux mesures différentes dans le temps et où les indices 1 et 2 désignent des mesures sur l'arbre de direction et la détection directe ou indirecte du mouvement de la crémaillère respectivement, où les domaines de définition du nombre de révolutions sont les espaces discrets et linéaires $N_1$ et $N_2$, et où dans l'espace formé par une erreur d'estimation de révolutions, le sous-espace donné par l'équation (4) contient uniquement l'origine, et comme l'espace est discret et linéaire, le rapport $C_2/C_1$ peut être décidé de sorte que l'équation (4) contient uniquement l'origine qui pour un espace donné $N_1$ x $N_2$ donne une détermination unique et directe des rotations $n_{1,2}$ et ainsi l'angle absolu de volant de direction $\delta$, et où les deux mesures sont définies par :

$$\phi_1 = C_1\delta - 360n_1 \qquad\qquad (1)$$

$$\phi_2 = C_2\delta - 360n_2 \qquad\qquad (2)$$

et où l'angle absolu de volant de directions est obtenu à partir de l'une des équations (1) ou (2).

2. Système de commande (9) selon la revendication 1, **caractérisé en ce que** le deuxième point de mesure est positionné en relation à un servomoteur (8) qui est couplé à la crémaillère (6) pour déplacer la crémaillère (6) lors de la rotation du volant de direction (1), le deuxième capteur angulaire (16) étant agencé pour la détection de la deuxième rotation angulaire $\Phi_2$ du moteur (8).

3. Système de commande (9) selon la revendication 2, **caractérisé en ce que** le moteur (8) est un moteur électrique (8).

4. Système de commande (9) selon la revendication 2 ou 3, **caractérisé en ce que** le deuxième point de mesure est positionné pour la mesure de la rotation d'un arbre de sortie du moteur électrique (8).

5. Système de commande (9) selon l'une quelconque des revendications précédentes, **caractérisé en ce que** les premier et deuxième capteurs angulaires (15, 16) rapportent la mesure d'un déplacement rotationnel sous forme d'une valeur modulo 360.

6. Système de commande (9) selon l'une quelconque des revendications précédentes, **caractérisé en ce que** la crémaillère (6) est couplée à l'arbre de direction (2) par un engrenage à pignon (5) pour la translation du mouvement rotationnel de l'arbre de direction (2) en un mouvement de traduction de la crémaillère (6).

7. Système de commande (9) selon la revendication 6, **caractérisé en ce que** la crémaillère (6) est couplée à des roues (7) destinées à diriger le véhicule lors d'un mouvement de la crémaillère (6) par rotation du volant de direction (1).

8. Système de commande (9) selon la revendication 7, **caractérisé en ce que** l'arbre de direction (2) comprend une colonne de volant de direction (3) et une barre de torsion (4), et **en ce que** le premier capteur angulaire (15) est positionné en relation à la colonne de volant de direction (3) ou à la barre de torsion (4).

9. Système de commande (9) selon l'une quelconque des revendications précédentes, **caractérisé en ce que**, pour un intervalle d'angle $\delta$ de volant de direction de +/- 540˚, le rapport $C_2/C_1$ est dans l'un des domaines ci-dessous pour donner une robustesse de jeu d'au moins 20˚ sur $\Phi_2$ :

[19,38 ; 19,44]
[19,57 ; 19,62]
[19,71 ; 19,88]
[20,12 ; 20,29]
[20,38 ; 20,44]
[20,57 ; 20,66]
[20,71 ; 20,88]
[21,12; 21,33]
[21,38 ; 21,44]
[21,57 ; 21,62]
[21,71 ; 21,88].

10. Procédé pour un système de commande (9) pour détecter un angle absolu de volant de direction $\delta$ dans un système de volant de direction pour un véhicule, le système de volant de direction comprenant un volant de direction (1) et un arbre de direction (2) couplé au volant de direction (1) et une crémaillère (6) couplée à l'arbre de direction (2) pour changer la direction de deux roues (7) lors d'un mouvement, le système de commande (9) comprenant également un premier capteur angulaire (15) agencé pour délivrer un premier signal de mesure $\Phi_1$ comprenant une information concernant une première rotation angulaire et un deuxième capteur angulaire (16) qui délivre un deuxième signal de mesure $\Phi_2$ comprenant une information concernant une deuxième rotation angulaire, les premier et deuxième capteurs angulaires (15, 16) sont des capteurs à un seul tour, le premier capteur angulaire (15) étant positionné dans un premier point de mesure en relation à l'arbre de direction (2) pour la production du premier signal de mesure $\Phi_1$ de la première rotation angulaire de l'arbre de direction (2) et le deuxième capteur angulaire (16) étant positionné dans un deuxième point de mesure pour la production du deuxième signal de mesure $\Phi_2$ dans le système de volant de direction pour la détection directe ou indirecte du mouvement de la crémaillère (6) lors de la rotation du volant de direction (1), **caractérisé en ce que** le procédé comprend l'étape de stockage d'un rapport de transfert prédéterminé $C_2/C_1$ entre une valeur $C_2$ représentant le gain du deuxième capteur angulaire (16) et $C_1$ représentant le gain du premier capteur angulaire (15) dans le système de commande (9), le procédé comprenant l'étape consistant à déterminer le rapport de transfert $C_2/C_1$ en fonction du fait qu'il ne peut exister qu'une seule paire unique $n_{1,2}$ de nombre de révolutions $n_{1,2}$ du premier capteur angulaire et du deuxième capteur respectivement qui satisfasse :

$$\frac{n_1}{C_1} - \frac{n_2}{C_2} = \frac{1}{360}\left(\frac{\phi_2}{C_2} - \frac{\phi_1}{C_1}\right). \qquad (3)$$

si et seulement si

$$\nexists\, n_{1,2}^1 \neq n_{1,2}^2 \text{de sorte que } C_2\left(n_1^1 - n_1^2\right) - C_1\left(n_2^1 - n_2^2\right) = 0 \qquad (4)$$

où les exposants 1 et 2 désignent deux mesures différentes dans le temps et où les indices 1 et 2 désignent des mesures sur l'arbre de direction et la détection directe ou indirecte du mouvement de la crémaillère respectivement, où les domaines de définition du nombre de révolutions sont les espaces discrets et linéaires $N_1$ et $N_2$, et où dans l'espace formé par une erreur d'estimation de révolutions, le sous-espace donné par l'équation (4) contient uniquement l'origine, et comme l'espace est discret et linéaire, le rapport $C_2/C_1$ peut être décidé de sorte que l'équation (4) contient uniquement l'origine qui pour un espace donné $N_1 \times N_2$ donne une détermination unique et directe des rotations $n_{1,2}$ et ainsi l'angle absolu de volant de direction $\delta$, et où les deux mesures sont définies par :

$$\phi_1 = C_1\delta - 360 n_1 \qquad (1)$$

$$\phi_2 = C_2\delta - 360 n_2 \qquad (2)$$

et où l'angle absolu de volant de directions est obtenu à partir de l'une des équations (1) ou (2).

**11.** Procédé selon la revendication 10, **caractérisé en ce que** le deuxième point de mesure est positionné en relation à un servomoteur (8) qui est couplé à la crémaillère (6) pour déplacer la crémaillère (6) lors de la rotation du volant de direction (1), le deuxième capteur angulaire (16) étant agencé pour la détection de la deuxième rotation angulaire $\Phi_2$ du moteur (8).

**12.** Procédé selon la revendication 11, **caractérisé en ce que** le moteur (8) est un moteur électrique (8).

**13.** Procédé selon la revendication 11 ou 12, **caractérisé en ce que** le deuxième point de mesure est positionné pour la mesure de la rotation d'un arbre de sortie du moteur électrique (8).

**14.** Procédé selon l'une quelconque des revendications 10 à 13, **caractérisé en ce que** les premier et deuxième capteurs angulaires (15, 16) rapportent la mesure d'un déplacement rotationnel sous forme d'une valeur modulo 360.

**15.** Procédé selon l'une quelconque des revendications 10 à 14, **caractérisé en ce que** la crémaillère (6) est couplée à l'arbre de direction (2) par un engrenage à pignon (5) pour la traduction du mouvement rotationnel de l'arbre de direction (2) en un mouvement de translation de la crémaillère (6).

**16.** Procédé selon la revendication 16, **caractérisé en ce que** la crémaillère (6) est couplée à des roues (7) destinées à diriger le véhicule lors d'un mouvement de la crémaillère (6) par rotation du volant de direction (1).

**17.** Procédé selon la revendication 16, **caractérisé en ce que** l'arbre de direction (2) comprend une colonne de volant de direction (3) et une barre de torsion (4), et **en ce que** le premier capteur angulaire (15) est positionné en relation à la colonne de volant de direction (3) ou à la barre de torsion (4).

**18.** Procédé selon l'une quelconque des revendications 10 à 17, **caractérisé en ce que**, pour un intervalle d'angle $\delta$ de volant de direction de +/- 540°, le rapport $C_2/C_1$ est dans l'un des domaines ci-dessous pour donner une robustesse de jeu d'au moins 20° sur $\Phi_2$ :

[19,38 ; 19,44]
[19,57 ; 19,62]
[19,71 ; 19,88]
[20,12 ; 20,29]
[20,38 ; 20,44]
[20,57 ; 20,66]
[20,71 ; 20,88]
[21,12; 21,33]
[21,38 ; 21,44]
[21,57 ; 21,62]
[21,71 ; 21,88].

Fig.1

EP 2 039 590 B1

Fig.2

EP 2 039 590 B1

Fig.3

Labels: 1, 2, 3, 4, 5, 6, 7, 7, 8, 9, 10, 11, 12, 13, 15, 16, $\delta$, $\Phi_1$, $\Phi_2$, 14

Steering Wheel Torque Reference Generator

Steering Wheel Torque Control

Actuator Control

Fig.4

Transfer ratio C2/C1

Maximum play on $\phi_2$ [deg]

## Fig.5

Fig.6

EP 2 039 590 B1

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6466889 B

- EP 1783036 A2